# EUROPEAN PATENT APPLICATION

(11) **EP 2 383 857 A2**
(43) Date of publication of application: **02.11.2011**
(21) Application number: 11163631.2
(22) Date of filing: 26.04.2011
(51) Int. Cl.: H02J 3/01

(54) **Method and system for managing power quality and efficiency**

(30) Priority: 27.04.2010 US 328325 P; 21.04.2011 US 91274
(71) Applicant: Siemens Industry, Inc., Alpharetta, GA 30005 (US)
(72) Inventor: Mazzoli, George A., Garnet Valley, PA 19061 (US)
(74) Representative: French, Clive Harry

(57) **Abstract**

A system and method for managing power uses a power meter that is electronically connected to a first point on a multiphase power distribution system to measure power information at that point. It determines harmonic distortion and true power factor correction based on the power information, and then determines configuration information for an active filter. The configuration information is send to one or more active filter to adjust harmonic distortion and true power factor correction on a second point in the distribution system.

## Description

### B. RELATED APPLICATIONS

This patent application claims priority to United States Provisional Patent Application No. 61/328,325, filed April 27, 2010, the disclosure of which is incorporated herein by reference in its entirety.

### C.-E. NOT APPLICABLE

### F. BACKGROUND

This application discloses an invention that is related, generally and in various embodiments, to a system and method for managing power quality and efficiency.

In most modem power applications, a power source is used to provide power to a load. Frequently, the current and voltage wave forms suffer from harmonic distortion which lowers the quality of power provided to a load, causing the load to draw power inefficiently. Harmonic distortion and the resulting low true power factor may cause an increase in energy costs and may also cause equipment to wear out over time due to the low quality of power. Therefore, a system that can compensate for harmonic distortion and correct true power factor is desired.

Present systems attempt to address harmonic distortion and true power factor issues by using inline passive filters on the power provided to the load. The passive filters are chosen based on a single state of the power system. Once inserted into the system the filters are not adjustable. Passive filters do not provide an ideal solution because they are unable to compensate for a change in the power system. For example, when a non-linear load (e.g., a computer power supply, lighting ballast, or variable frequency drive) is placed into the system, a passive filter based system will be unable to compensate for the resulting harmonic distortion and power factor degradation, causing the overall system to operate inefficiently and use extra energy. Further, passive filters create a single point of failure in a system, which decreases the reliability of a power system.

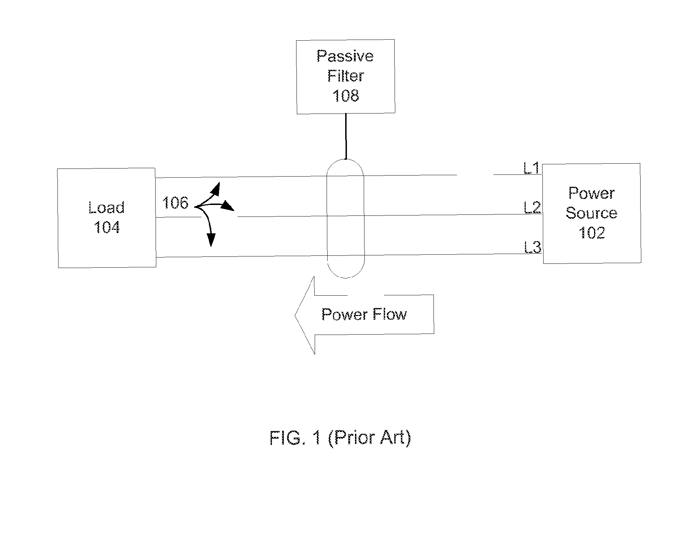

An example of a prior art system is provided in FIG. 1. FIG. 1 depicts a three phase power system using a passive filter. The power is provided from the power source **102** to the load **104** via three transmission lines **106** that are out of phase with one another. In the prior art system, the passive filter is chosen based on the system parameters and compensates for a particular system configuration. If load **104** is altered or the system otherwise changes during operation, the passive filter cannot compensate for the change and the system will suffer harmonic distortion and power factor degradation at the load **104**.

### G. SUMMARY

The invention described below is not limited to the particular systems, methodologies or protocols described, as these may vary. The terminology used in this document is for the purpose of describing particular embodiments only, and is not intended to limit the scope of the present disclosure.

As used in this document and in the appended claims, the singular forms "a," "an," and "the" include plural reference unless the context clearly dictates otherwise. Unless defined otherwise, all technical and scientific terms used in this document have the same meanings as commonly understood by one of ordinary skill in the art. As used in this document, the term "comprising" means "including, but not limited to."

In one general respect, a system for managing power includes an incoming power transformer, a multi-phase power distribution system, and a group of loads connected to the multi-phase power distribution system downstream from the transformer. An active filter is electronically connected to each phase of the distribution system at a connection point. The active filter may include a data port for receiving configuration information. The active filter is configurable to reduce harmonic distortion and correct true power factor across each phase of the multiphase power distribution system. A power meter is located upstream from the active filter on the distribution system. The power meter is electronically connected to each phase of the multiphase power system to collect power measurement information. The power meter may include a data port for transmitting the power measurement information. A processor is in communication with the active filter and the power meter. The processor is programmed to execute program instructions to receive the power measurement information from the power meter and use the power measurement information to generate and send configuration information to the data port of the active filter. Thus, the active filter may be configured to reduce distortion and correct true power factor on the multiphase power distribution system at the connection point. In the embodiments described above, the multiphase power element may be a three-phase power distribution system.

Optionally, the system also may include a second power meter and a second active filter. The second active filter may be electronically connected to each phase of the distribution system at a second connection point. The second power meter may be located upstream from the second active filter on the distribution system. The processor may be in communication with the second active filter and the second power meter and is programmed to execute program instructions to receive power measurement information from the data port of the second power meter and use the power measurement information to generate and send configuration information to the data port of the second active filter to configure the second active filter to reduce harmonic distortion and correct true power factor on the multiphase power distribution system at the second connection point.. The system also may include additional power meters and active filters, such that there are more power meters than active filters in the system, more active filters than power meters. Optionally, each active filter may correspond to a load, while each power meter may correspond to a source location.

Optionally, a set of current transformers may be connected to one or more of the active filters. Each current transformer may be positioned to pass over its corresponding phase of the distribution system at a point that is downstream from the point of connection for its corresponding active filter. Each current transformer may be electronically connected to the active filter to provide signals to the active filter. The signals may cause the filter to self-configure and further reduce distortion and correct true power factor on the multiphase power distribution system at the filter's connection point.

### H. DESCRIPTION OF THE DRAWINGS

FIG. 1 illustrates an embodiment of a prior art power system for reducing harmonic distortion and correcting power factor.

FIG. 2 illustrates an embodiment of a power system using a power meter and active filter to reduce harmonic distortion and correct true power factor at the load.

FIG. 3 illustrates an embodiment of a power system using multiple power meters and active filters to reduce harmonic distortion and correct true power factor at multiple load points that are powered by separate power sources.

FIG. 4 illustrates an embodiment of a power system using multiple power meters and active filters to reduce harmonic distortion and correct true power factor at multiple loads powered by a single power source.

FIG. 5 illustrates an embodiment of a power system using multiple power meters and a single active filter to reduce harmonic distortion and correct true power factor at multiple loads powered by a single power source.

FIG. 6 illustrates an embodiment of a power system using multiple active filters and a single power meter to reduce harmonic distortion and correct true power factor at multiple loads powered by a single power source.

### I. DETAILED DESCRIPTION

At least some of the figures and descriptions below have been simplified to focus on elements that are relevant for a clear understanding of the disclosure, while eliminating, for purposes of clarity, other elements that those of ordinary skill in the art will appreciate may also comprise a portion of the invention. However, because such elements are well known in the art, and because they do not necessarily facilitate a better understanding of the invention, a description of all such elements is not provided below.

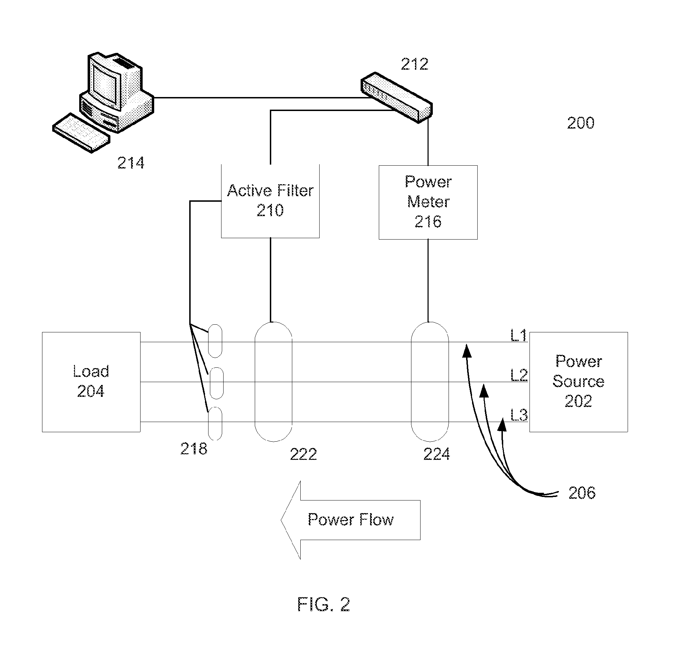

FIG. 2 illustrates an embodiment of a power system **200** powered by a power source **202** capable of using a power meter **216** and active filter **210** to reduce harmonic distortion and correct true power factor at the load **204**. In one embodiment, the power source **202** is a transformer connected to a utility line that provides three-phase power to a manufacturing building. However, it is noted that the power source **202** may be any type of power source that produces power that suffers from harmonic distortion and/or power factor degradation. The power source **202** provides power to a load **204** through distribution lines **206**. The three distribution lines **206** represent the three different phases associated with a three phase power system. L1 is a line carrying phase A, L2 is a line carrying phase B, and L3 is a line carrying phase C. Each distribution line may be a wire of a three-wire system, a bus bar, or another conductor carrying a phase of a multiphase power delivery system, While this particular embodiment uses a three phase power system, it is appreciated that the power system may be single phase or any variety of multiphase systems. The load **204** may be any load used on a power system, linear or non-linear. Examples of non-linear loads include, but are not limited to, computer power supply, lighting ballast, and variable frequency drives. As described above, the power provided by the power source **202** may suffer from harmonic distortion and degradation of true power factor.

In the present embodiment, the power system corrects for the harmonic distortion and the degradation of true power factor through the use of a power meter **216**, an active filter **210**, a communications junction such as an Ethernet switch **212**, and a processor **214** programmed to execute particular instructions. In the present embodiment, the power meter **216** is located upstream of the active filter **210** and downstream of the power source **202** (e.g., on the low voltage side of the transformer).

In one embodiment, the power meter **216** may be, for example, a Siemens PAC4200 Power meter capable of performing a variety of power measurements to collect various power information including, but not limited to: phase A, B, C current and voltage; phase-to-phase voltage; phase wattage; power factor; real power; apparent power; complex power; reactive power; phase A, B, C total harmonic voltage and current; individual phase current and voltage harmonics (e.g., Phase A 3^{rd} Current Harmonic, Phase B 50^{th} Voltage Harmonic, etc.). Further, the power meter **216** may perform calculations on the measured power information to calculate different types of power information, including performing a fast fourier analysis on the various harmonic measurements. Additionally, the power meter **216** may include a data port (not shown) signal transmitter, or other output that is capable of transmitting power information. It is appreciated that the data port of the power meter **216** may communicate over a wide variety of communication mediums, including wired (e.g., ethernet or USB connections) and wireless (e.g., 802.11 or Bluetooth) communication mediums.

In the present embodiment, the active filter **210** may be configurable to adjust various power characteristics at the connection point **222** of the active filter **210** to the system **200**. Examples of active filters include the Siemens S120 and Schaffner ECOsine active series. The adjustable power characteristics may include total harmonic distortion current and voltage, true power factor, active power on the individual transmission lines L1, L2, and L3, output reactive current rms of the active filter 210, and individual harmonic compensation (e.g., Phase A 3^{rd} Current Harmonic, Phase B 50^{th} Voltage Harmonic, etc.). Additionally, the active filter **210** may include a data port (not shown) signal receiver, or other input that is capable of receiving configuration information. The configuration information may be used by the active filter **210** to adjust the power characteristics of the system **200**. It is appreciated that the data port of the active filter **210** may communicate over a wide variety of communication mediums, including wired (e.g., ethernet or USB connections) and wireless (e.g., 802.11 or Bluetooth) communication mediums.

The present embodiment collects the various power information using the power meter **216**, performs an initial analysis of the power information at the power meter (e.g., fast fourier analysis of the harmonic power information), and sends the resulting power information through an Ethernet switch **212** or some other communication medium to a processor **214**. The processor **214** may be included within a computer, but may also be a standalone processor or integrated into a different device. It is appreciated that the initial analysis of the power information may take place on the processor **214** rather than the power meter **216**. Further, it is appreciated that the processor **214** may be integrated into the active filter **210**, the power meter **216**, or some other device in the power system **200** and does not need to be a separate device for the system **200** to work properly.

Once the processor **214** has received the power information, the processor **214** uses the power information to generate configuration information and sends the configuration information to the active filter **210** to cause the active filter **210** to adjust the power characteristics of the system **200**. The processor may execute programming instructions to create instructions or signals that will optimize, or at least change, the configuration of the active filter **210** to adjust the power characteristics of the power system **200**. The processor **214** may be electronically connected to a computer readable memory that includes programming instructions. The processor's programming instructions may include one or more algorithms that use the power meter **216** measurements such as feedback of harmonic currents and voltages, as well as true power factor which includes the harmonic component of real power factor. The processor **214** may utilize the algorithms to resolve different points of measurement on the power system **200** by analyzing the overall system reactance at these points, modeling the power system **200**, and resolving references to be sent to the active filter **210** to improve the power system **200** elements of harmonic content, power factor, and power consumption. The power system may be modeled by developing a model of a circuit having reactance equivalent to the system reactance at the points on the power system that are be monitored, as well as having equivalent load profiles.

The equivalent circuit may be mathematically modeled based upon impedance, capacitance, and resistance or V=I*Z. This mathematical model may be a standard model, or it may be unique for each power system and may be derived by the static system single line diagram of the static loads. The mathematical model may be the basis for determining optimal design specifications for the power system and an optimal state for each point on the system that will be the set-point profile established in the programming instructions. The set-point profile for each point on the system may be the adjustment reference after a Fourier transform is performed, and it may be sent to the active filter **210** at each harmonic frequency. The processor **214** may be programmed to send references at individual harmonic amplitudes of current distortion to off-set this distortion for the entire power system **200** by managing each active filter **210** in an overall system **200**. References may also include leading power factor which may provide the optimal power factor along with the harmonic current amplitudes up to the 50^{th} harmonic. The program control loops for each trim reference may be a traditional PID (Proportional Integral and Derivative) gain loop which will provide a steady state response to system changes to maintain the trim set-point reference. This concept may also be applied to true power factor after the harmonic component of power factor is introduced to the real power factor calculation based upon the measured active and reactive power derived from each power meter **216** in the power system. PIDs may also be applied to the system model and set-point references will be sent to each active filter **210** to adjust the power factor to unity.

Safety and diagnostic circuits may also be used in conjunction with the power system **200**. For example, the injected currents and leading power factor references may be monitored by the power meter **216** and compared to the output of the same parameters in the active filters **210**. This comparison may be monitored within a predetermined band-width based upon the system model to ensure that safe limits are not exceeded. If the safe limits are exceeded in the system, damage could occur to the power system equipment and loads. The bandwidth may be set as predefined limits that cannot be exceeded. If exceeded due to catastrophic failure or system fault, the programming instructions may include a safety algorithm to command a shut down the system and alarm a system fault to obtain maintenance personnel's attention.

Traditional energy management may also be provided as part of system **200** and may include reporting tools for the client for an integrated approach to power system management and reliability. The system **200** may update and control the optimization of power consumption, efficiency, and reliability in a closed-loop control function under one second maximum to continuously adapt to load changes, fluctuation, and system changes.

Optionally, a set of current transformers **218** may be electrically connected to the distribution lines **206**. For example, one current transformer may be wrapped around each phase of the distribution system so that each current transformer can be used to measure current that is flowing through its corresponding phase. The set of current transformers **218** may be positioned downstream from the connection point **222** of the active filter **210**, and the current transformers **218** provide feedback to the active filter, which the active filter **210** may use to self-regulate and further adjust the effect of the active filter on the distribution system at the connection point **222**. The active filter **210** may utilize the current transformers 218 and/or a separate set of current transformers to continuously read the current distortion levels at that particular point of juncture of the power system **200** in a closed-loop fashion to continuously adapt to load changes. Using this technique, the system may adapt to the load changes in less than a microsecond. The current distortion levels may be fed to the overall process for the entire power system **200** resulting in the individual active filters **210** being adjusted to optimize the entire power system.

As shown in FIG. 2, the connection point **224** of the power meter **216** to the distribution lines **206** may be near, for example within 10 meters of distribution system linear distance from, the low voltage side of the incoming transformer **202**, while the connection point **222** of the filter **210** may be near the load **204**. Optionally, the system may include additional loads and active filters, such that each active filter is in communication with the communications junction **212**.

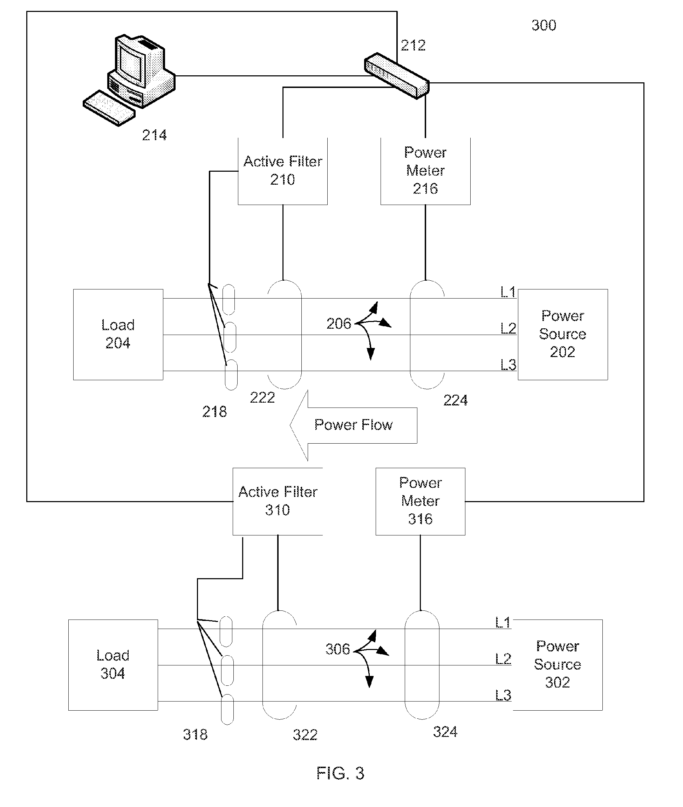

FIG. 3 illustrates an embodiment of a power system using multiple power meters and active filters to reduce harmonic distortion and correct true power factor at multiple load points that are powered by separate power sources. Elements similar to elements in FIG. 2 have been labeled with the same numbers as those elements in the prior figure for ease of discussion. FIG. 3 shows the system of FIG. 2 with an additional power source **302**, load **304**, and distribution line set **306**. To compensate for the potential harmonic distortion and power factor degradation occurring at load **304**, an additional active filter **310** and power meter **316** have been added to the system and connected between the load 304 and the power source **302**. One example of the embodiment described in FIG. 3 would be a manufacturing building that is powered by multiple transformers. The transformers would correspond to power sources **202** and **302** and the manufacturing equipment would correspond to loads **204** and **304**.

The active filter **310** and power meter **316** have similar capabilities and characteristics to active filter **210** and power meter **216** as described above. Also, similar to active filter **210** and power meter **216**, active filter **310** and power meter **316** are in communication with processor **214** via a communications junction such as an Ethernet switch **212** or some other communication medium. In the present embodiment, the power meter **316** transmits power information relating to power source **302** and load **304** to processor **214**. The processor **214** receives the power information and uses the power information to generate configuration information in a similar manner to that described in FIG. 2. Similar to FIG. 2, the processor **214** sends the configuration information to both active filter **210** and active filter **310** where it is used to adjust the power characteristics at the load **304** at each location.

Optionally, each active filter **210, 310** may receive signals from a set of current transformers **218, 318** that is electrically connected to the corresponding distribution lines **206**, **306**. Each set of current transformers is positioned downstream from the connection point **222**, **322** of its corresponding active filter **210, 310** to provide feedback to the active filter, which the active filter may use to self-regulate and further adjust the effect of the active filter on the distribution system at the connection point **222, 322**. The active filters **210, 310** may inject currents having equal amplitude and opposite harmonics at multiple harmonic frequencies to try to zero the harmonic current at that point on the power system **300**. Utilizing the processor **214**, the amplitudes along with true power factor may then be adjusted to optimize the benefit for the entire power system **300**.

As shown in FIG. 2, the connection points **224, 324** of each power meter **216**, **316** to the distribution lines **206, 306** may be near, for example within 10 meters of distribution system linear distance from, the low voltage side of the corresponding incoming transformer **202, 302**, while the connection point **222, 322** of the filters **210, 310** may be their corresponding loads **204, 304.** In general, the power meters will be closer to the incoming power source, while any active filters may be further away from the incoming power source and/or similarly distanced from their respective loads.

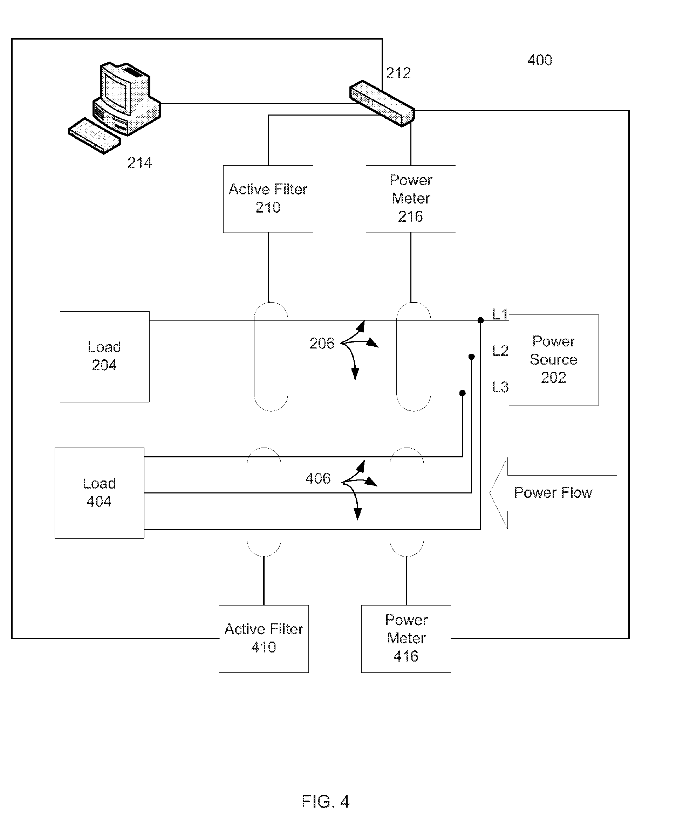

FIG. 4 illustrates an embodiment of a power system using multiple power meters and active filters to reduce harmonic distortion and correct true power factor at multiple loads powered by a single power source. Elements similar to elements in prior figures have been labeled with the same numbers as those elements in the prior figure for ease of discussion. FIG. 4 shows the system of FIG. 2 with an additional load **404** and distribution lines **406**. To compensate for the potential harmonic distortion and power factor degradation occurring at load **404**, an active filter **410** and power meter **416** have been added to the system and connected between the load **404** and the power source **202**. Alternatively, a single power meter may be used and connected to the distribution system at a point before the lines diverge into lines **206** and **406**. One example of the embodiment described in FIG. 4 would be multiple pieces of manufacturing equipment that are powered by a single transformer. The transformer would correspond to the power source **202** and the manufacturing equipment would correspond to loads **204** and **404**. The present embodiment offers a high level of power quality and efficiency because the power meters **216, 416** and active filters **210, 410** are dedicated to their corresponding load **204, 404.** As a result, the active filters **210, 410** may be configured to provide the exact adjustment needed at each load point to provide maximum power quality and efficiency.

The active filter **410** and power meter **416** have similar capabilities and characteristics to active filter **210** and power meter **216** as described above. Also, similar to active filter **210** and power meter **216**, active filter **410** and power meter **416** are in communication with processor **214** via an Ethernet switch **212** or some other communication medium. In the present embodiment, the power meter **416** transmits power information relating to power source **202** and load **404** to processor **214**. The processor **214** receives the power information and uses the power information to generate configuration information in a similar manner to that described in FIG. 2. Similar to FIG. 2, the processor **214** sends the configuration information to active filter **410** where it is used to adjust the power characteristics at the load **404**.

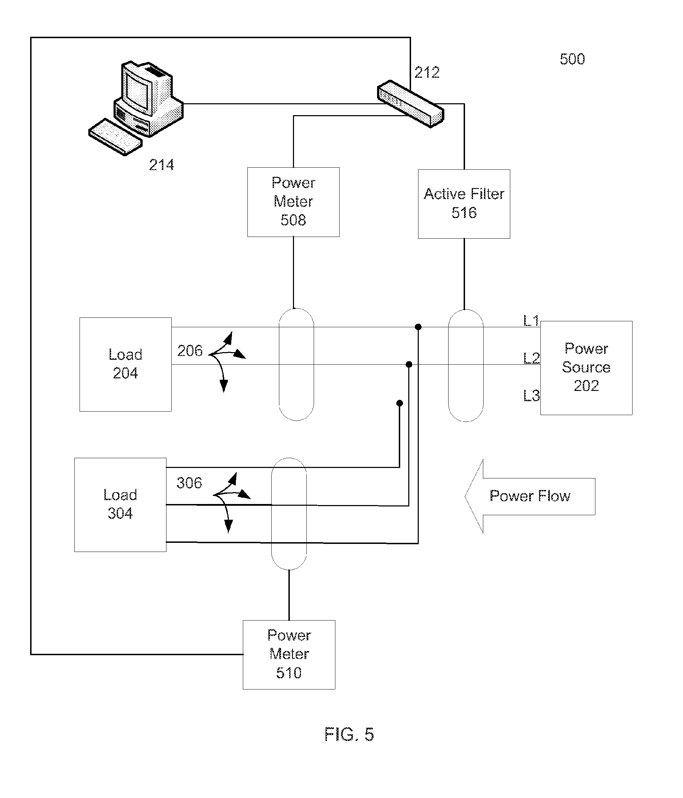

FIG. 5 illustrates an embodiment of a power system **500** using multiple power meters **508, 510** and a single active filter **516** to reduce harmonic distortion and correct true power factor at multiple loads **204, 304** powered by a single power source **202**. Elements similar to elements in prior figures have been labeled with the same numbers as those elements in the prior figure for ease of discussion. FIG. 5 depicts a power source **202** providing power to multiple loads **204, 304** via multiple distribution lines **206, 306.** Power meters **508, 510** are placed near each load **204, 304** to measure power information. The power meters **508, 510** are located downstream from the active filter **516**. The power information is sent from the power meters **508, 510** to a processor **214**. The processor receives the power information and uses the power information to generate configuration information that is sent to the active filter **516** to adjust the power characteristics of the system. One example of the embodiment described in FIG. 5 would be multiple pieces of manufacturing equipment that are powered by a single transformer. The transformer would correspond to the power source **202** and the manufacturing equipment would correspond to loads **204** and **304**. Because active filters **516** are currently very expensive, the present embodiment offers a less expensive manner of providing power management by reducing the amount of filters needed in the system. However, as a result of reducing the amount of filters in the system, the power quality and efficiency realized at the loads **204, 304** may be less than that realized by the embodiment illustrated in FIG. 4.

The active filter **516** and power meters **508, 510** have similar capabilities and characteristics to active filter **210** and power meter **216** as described above. Also, similar to active filter **210** and power meter **216**, active filter **516** and power meter **508, 510** are in communication with processor **214** via an Ethernet switch **212** or some other communication medium. Further, the processor **214** and Ethernet switch **212** have similar properties and capabilities to those described above in FIG. 2. In the present embodiment, the power meters **508, 510** transmits power information relating to power source **202** and loads **204, 404** to processor **214**. The processor **214** receives the power information and uses the power information to generate configuration information in a similar manner to that described in FIG. 2. Similar to FIG. 2, the processor **214** sends the configuration information to the active filter **516** where it is used to adjust the power characteristics at the load **204, 304**. The processor **214** may execute specialized programming instructions to optimize the configuration of the active filter **516** to adjust the power characteristics of the power system **500** according to the power requirements of the loads **204, 304.**

The processor **214** may implement programming instructions that apply algorithms using the feedback of harmonic currents and voltages, as well as true power factor which includes the harmonic component of real power factor measured by the power meters **508**, **510** on the power system **500**. The processor **214** may utilize the algorithms to resolve different points of measurement on the power system **200** by analyzing the overall system reactance at these points, modeling the power system **200**, and resolving references to be sent to the active filter **516** to improve and/or optimize the overall power system **200** for harmonic content, power factor, and power consumption. The programming instructions may instruct the processor **214** to send reference signals at individual harmonic amplitudes of current distortion to off-set this distortion for the power system **200** by managing the active filter **516** in an overall system **200**. Reference signals may also include leading power factor which may provide the optimal power factor along with the harmonic current amplitudes up to the 50^{th} harmonic. Traditional energy management may also be provided as part of system **200** and may include reporting tools for the client for an integrated approach to power system management and reliability. The system **200** may update and control the optimization of power consumption, efficiency, and reliability in a closed-loop control function under one second maximum to continuously adapt to load changes, fluctuation, and system changes.

The active filter **516** may utilize a separate set of current transformers to continuously read the current distortion levels at that particular point of juncture of the power system **500** in a closed-loop fashion to continuously adapt to load changes. Using this technique, the system may adapt to the load changes in less than a microsecond. The current distortion levels may be fed to the overall process for the entire power system **500** resulting in the individual active filters **516** being adjusted to optimize the entire power system.

The active filter **516** may inject equal and opposite harmonic current amplitudes at each harmonic frequency to try to zero the harmonic current at that point on the power system **500**. Utilizing the processor **214**, the amplitudes along with true power factor may then be adjusted to optimize the benefit for the entire power system **500**.

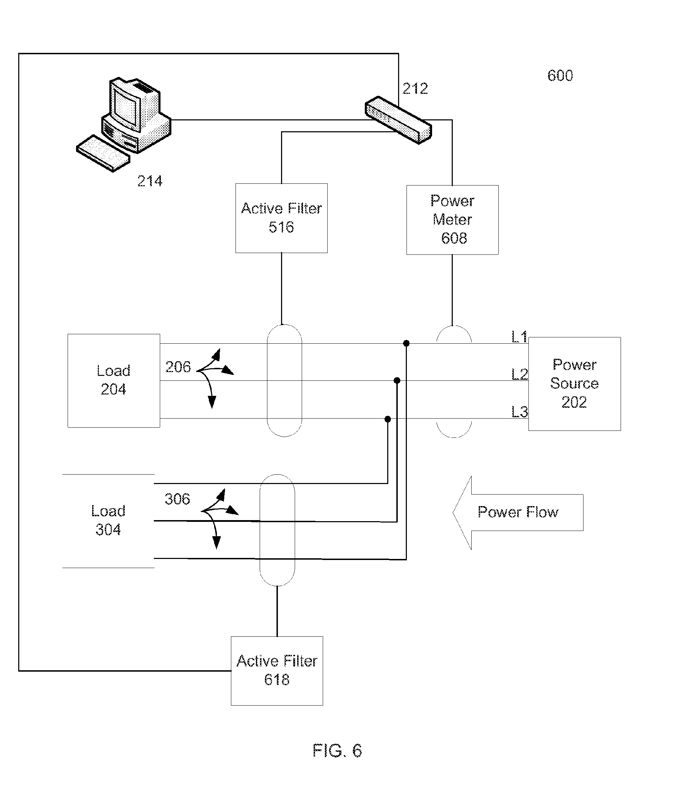

FIG. 6 illustrates an embodiment of a power system **600** using multiple active filters **616, 618** and a single power meter **608** to reduce harmonic distortion and correct true power factor at multiple loads **204, 304** powered by a single power source **202**. Elements similar to elements in prior figures have been labeled with the same numbers as those elements in the prior figure for ease of discussion. FIG. 6 depicts a power source **202** providing power to multiple loads **204, 304** via multiple distribution lines **206, 306**. Power meter **608** is placed near the power source **202** to measure power information. The power meter **608** is located upstream from the active filters **616, 618**. The power information is sent from the power meter **608** to a processor **214**. The processor **214** receives the power information and uses the power information to generate configuration information that is sent to the active filters **616, 618** to adjust the power characteristics of the system. One example of the embodiment described in FIG. 6 would be multiple pieces of manufacturing equipment that are powered by a single transformer. In this example, the transformer would correspond to the power source **202** and the manufacturing equipment would correspond to loads **204** and **304**.

The active filters **616, 618** and power meter **608** have similar capabilities and characteristics to active filter **210** and power meter **216** as described above. Also, similar to active filter **210** and power meter **216**, active filters **616, 618** and power meter **608** are in communication with processor **214** via an Ethernet switch **212** or some other communication medium. Further, the processor **214** and Ethernet switch **212** have similar properties and capabilities to those described above in FIG. 2. In the present embodiment, the power meters 608 transmits power information relating to power source **202** and loads **204, 404** to processor **214**. The processor **214** receives the power information and uses the power information to generate configuration information in a similar manner to that described in FIG. 2. Similar to FIG. 2, the processor **214** sends the configuration information to the active filters **616, 618** where it is used to adjust the power characteristics at the load **204, 304**. The processor **214** may execute specialized programming instructions to optimize the configuration of the active filters **616, 618** to adjust the power characteristics of the power system **600** according to the power requirements of the loads **204, 304.**

The processor **214** may implement programming instructions to determine reference signals using one or more algorithms using the feedback of harmonic currents and voltages, as well as, true power factor which includes the harmonic component of real power factor measured by the power meter **608** on the power system **600**. The processor **214** may utilize the algorithms to resolve different points of measurement on the power system **600** by analyzing the overall system reactance at these points, modeling the power system **600**, and resolving references to be sent to the active filters **616, 618** to optimize the overall power system **600** for harmonic content, power factor, and power consumption. The processor **214** may be programmed to send references at individual harmonic amplitudes of current distortion to off-set this distortion for the entire power system **600** by managing the active filters **616, 618** in an overall system **600**. Reference signals may also include leading power factor which may provide the optimal power factor along with the harmonic current amplitudes up to the 50^{th} harmonic. Traditional energy management may also be provided as part of system **600** and may include reporting tools for the client for an integrated approach to power system management and reliability. The system **600** may update and control the optimization of power consumption, efficiency, and reliability in a closed-loop control function under one second maximum to continuously adapt to load changes, fluctuation, and system changes.

The active filters **616, 618** may utilize a separate set of current transformers to continuously read the current distortion levels at that particular point of juncture of the power system **600** in a closed-loop fashion to continuously adapt to load changes. Using this technique, the system may adapt to the load changes in less than a microsecond. The current distortion levels may be fed to the overall process for the entire power system **600** resulting in the individual active filters **616, 618** being adjusted to optimize the entire power system.

The active filters **616, 618** may inject equal and opposite harmonic current amplitudes at each harmonic frequency to try to zero the harmonic current at that point on the power system **600**. Utilizing the processor **214**, the amplitudes along with true power factor may then be adjusted to optimize the benefit for the entire power system **600**.

While several embodiments of the invention have been described in this document by way of example, those skilled in the art will appreciate that various modifications, alterations, and adaptations to the described embodiments may be realized without departing from the spirit and scope of the invention defined by the appended claims.

## Claims

1. A system for managing power, comprising:
in a system having an incoming power transformer, a multi-phase power distribution system, and a plurality of loads connected to the multi-phase power distribution system downstream from the transformer:
an active filter electronically connected to each phase of the distribution system at a connection point, the active filter including a data port for receiving configuration information, the active filter being configurable to reduce harmonic distortion and correct true power factor across each phase of the multiphase power distribution system;
a power meter located upstream from the active filter on the distribution system, the power meter electronically connected to each phase of the multiphase power system to collect power measurement information, the power meter including a data port for transmitting the power measurement information;
a processor, in communication with the active filter and the power meter, programmed to execute program instructions to receive the power measurement information from the data port of the power meter and use the power measurement information to generate and send configuration information to the data port of the active filter to configure the active filter to reduce harmonic distortion and correct true power factor on the multiphase power distribution system at the connection point.

2. The system of claim 1, wherein the multiphase power element is three-phase power distribution system.

3. The system of claim 1, further comprising,
a second power meter and a second active filter , the second active filter electronically connected to each phase of the distribution system at a second connection point,
wherein the second power meter is located upstream from the second active filter on the distribution system,
wherein the processor is in communication with the second active filter and the second power meter and is programmed to execute program instructions to receive power measurement information from the data port of the second power meter and use the power measurement information to generate and send configuration information to the data port of the second active filter to configure the second active filter to reduce harmonic distortion and correct true power factor on the multiphase power distribution system at the second connection point.

4. The system of claim 3, wherein the processor is programmed to execute program instructions to use the power measurement information from the first and second power meters to generate and send configuration information to the data ports of the first and second active filters to configure the active filters to reduce harmonic distortion and correct true power factor over the multiphase power distribution system.

5. The system of claim 3, wherein the system further comprises additional power meters and active filters, wherein there are more power meters than active filters in the system.

6. The system of claim 1, wherein the power meter is positioned on the distribution system at a point that is near a low voltage output of the transformer, and the active filter is positioned on the distribution system at a point that is near a load.

7. The system of claim 1, further comprising:
a set of current transformers, wherein:
the set includes a current transformer for each phase of the multi-phase power distribution system,
each current transformer is positioned to pass over its corresponding phase of the distribution system at a point that is downstream from the point of connection for the active filter; and
each current transformer is electronically connected to the active filter and provides signals to the active filter.

8. A method for managing power, comprising:
measuring power information using a power meter that is electronically connected to a first point on a multiphase power distribution system;
determining harmonic distortion and true power factor correction based on the power information;
determining, using a processor, configuration information for an active filter;
sending, via a communication system, the configuration information to the active filter;
adjusting, by the active filter, harmonic distortion and true power factor on a second point in the distribution system based on the configuration power information, wherein the second point is downstream from the first point.

9. The method of claim 8, wherein the determining harmonic distortion and true power factor correction includes performing a fast fourier analysis of the harmonic distortion and a measurement of the true power factor.

10. The method of claim 8, wherein the measuring power information includes measuring data at a low voltage side of a transformer.

11. The method of claim 10, wherein the measuring power information includes measuring at least one type of data selected from a group consisting of load current, load voltage, true power factor, harmonic current, harmonic voltage, and overall power consumption.

12. The method of claim 8, further comprising;
using a set of power meters to measure additional power quality information at a third point in the power distribution system, the third point being located downstream of and near the second point;
receiving, by the active filter, the additional power information; and
self-adjusting, by the active filter, the harmonic distortion and power factor correction based on the additional power information.

13. A computer program product, comprising a computer usable medium having a computer readable program code embodied therein, the computer readable program code adapted to be executed to implement a method for managing in a power system, the method comprising:
receiving power information from a power meter that is electronically connected to a first point on a multiphase power distribution system;
determining harmonic distortion and true power factor correction based on the power information;
determining, using a processor, configuration information for an active filter located at a second point in the distribution system, wherein the second point is downstream from the first point;
sending, via a communication system, the configuration information to the active filter.

14. The computer program product of claim 13, wherein determining harmonic distortion and true power factor correction includes performing a fast fourier analysis of harmonic distortion and a true power factor measurement at the first point on the multiphase power distribution system.

15. A system for managing power, comprising:
in a system having an power source, a multi-phase power distribution system, and a plurality of loads connected to the multi-phase power distribution system downstream from the transformer:
an active filter electronically connected to each phase of the distribution system at a connection point, the active filter being configurable to reduce harmonic distortion and correct true power factor across each phase of the multiphase power element;
a power meter electronically connected to each phase of the multiphase power system to collect power measurement information near the power source;
a processor, in communication with the active filter and the power meter, programmed to execute program instructions to receive the power measurement information from the power meter and use the power measurement information to generate and send configuration information to the active filter to configure the active filter to reduce harmonic distortion and correct true power factor on the multiphase power distribution system at the connection point.

16. The system of claim 15 wherein the power meter is electronically connected to the distribution system at a point that is upstream from the active filter on the distribution system.

17. The system of claim 15 wherein the power meter is electronically connected to the distribution system at a point that is downstream from the active filter on the distribution system.

18. The system of claim 15, further comprising:
a set of current transformers, wherein:
the set includes a current transformer for each phase of the multi-phase power distribution system,
each current transformer is positioned to pass over its corresponding phase of the distribution system at a point that is downstream from the point of connection for the active filter; and
each current transformer is electronically connected to the active filter and provides signals to the active filter to further configure the active filter to reduce harmonic distortion and correct true power factor on the multiphase power distribution system at the connection point.

19. The system of claim 18, further comprising,
a second active filter , the second active filter electronically connected to each phase of the distribution system at a second connection point that is downstream from the power meter,
wherein the processor is in communication with the second active filter and is programmed to generate and send configuration information to the second active filter to configure the second active filter to reduce harmonic distortion and correct true power factor on the multiphase power distribution system at the second connection point.

20. The system of claim 18, further comprising,
a second power meter that is electronically connected to each phase of the distribution system at a point near an additional second power source,
wherein the processor is in communication with the second power meter and is programmed to receive additional power measurement information from the second power meter and use the additional power measurement information to generate and send the configuration information to the active filter.
